# EUROPÄISCHE PATENTANMELDUNG

(11) **EP 4 482 122 A1**
(43) Veröffentlichungstag der Anmeldung: **25.12.2024**
(21) Anmeldenummer: 23180340.4
(22) Anmeldetag: 20.06.2023
(51) Int. Cl.: H04L 67/12

(54) **VERFAHREN UND SYSTEM ZUR ÜBERMITTLUNG ZEITKRITISCHER DATEN INNERHALB EINES KOMMUNIKATIONSNETZES**

(71) Anmelder: Siemens Aktiengesellschaft, 80333 München (DE)
(72) Erfinder: Albrecht, Harald, 90475 Nürnberg (DE)
(74) Vertreter: Siemens Patent Attorneys

(57) **Zusammenfassung**

Zur Übermittlung zeitkritischer Daten von bzw. zu auf einem Host (100) ablaufenden Steuerungsanwendungen (113-115) werden Sende- bzw. Empfangs-Queues (101-103) zumindest eines Netzwerkadapters (110) des Host für die Steuerungsanwendungen jeweils an einem Socket (130) verfügbar gemacht, der einer Netzwerk-Protokollstapel-Funktionseinheit (120) eines Betriebssystems (111) des Host oder einer Ablaufsteuerungsumgebung (112) zugeordnet ist. Die Steuerungsanwendungen fordern jeweils eine Bereitstellung der Sockets von einer Socket-Verwaltungseinheit (160) an, die für die jeweilige Steuerungsanwendung einen neuen zugeordneten Socket erzeugt und diesen an eine verfügbare Sende- bzw. Empfangs-Queue des Netzwerkadapters bindet. Über den jeweils zugeordneten Socket und die an diesen gebundene Sende- bzw. Empfangs-Queue tauschen die Steuerungsanwendungen zeitkritische Daten aus.

## Beschreibung

Die vorliegende Erfindung betrifft ein Verfahren zur Übermittlung zeitkritischer Daten innerhalb eines Kommunikationsnetzes, insbesondere innerhalb eines Kommunikationsnetzes eines industriellen Automatisierungssystems, und ein System, insbesondere einen Host, zur Durchführung dieses Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

WO 2022/042905 A1 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

In EP 3 975 502 A1 ist ein Verfahren zur Bereitstellung von zeitkritischen Diensten mittels einer Ablaufsteuerungsumgebung beschrieben, bei dem für jeden Dienst jeweils zumindest eine Server-Komponente vorgesehen ist, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die zumindest eine Gateway-Komponente leitet Dienstzugriffsanfragen entsprechend Weiterleitungs- bzw. Filterregeln, welche die Zugangsinformationen abbilden, und dem Betriebsmodus an die Server-Komponenten weiter.

Aus der älteren europäischen Patentanmeldung mit dem Anmeldeaktenzeichen 22199091.4 ist ein Verfahren zur Übermittlung zeitkritischer Daten innerhalb eines Kommunikationsnetzes von bzw. zu Steuerungsanwendungen bekannt, die jeweils mittels zumindest einer Ablaufsteuerungskomponente bereitgestellt werden. Die Ablaufsteuerungskomponente sind jeweils in eine auf einem Host installierte Ablaufsteuerungsumgebung ladbar und dort ausführbar. Außerdem wird den Ablaufsteuerungskomponenten jeweils zumindest ein virtueller Netzadapter zugeordnet. Die Ablaufsteuerungskomponenten senden zur Reservierung von Ressourcen zum Senden bzw. Empfangen von zeitkritische Daten umfassenden Datenströmen jeweils einen Reservierungsauftrag an ein der Ablaufsteuerungsumgebung zugeordnetes Reservierungsmodul. Das Reservierungsmodul sendet entsprechend zugeordneten Dienstgüteanforderungen jeweils eine Reservierungsanfrage oder -bestätigung an weiterleitende Kommunikationsgeräte oder eine übergeordnete Steuerungseinheit. Außerdem veranlasst das Reservierungsmodul die Queue-Steuerungseinheit, dem virtuellen Netzadapter der jeweiligen Ablaufsteuerungskomponente entsprechend einer den Dienstgüteanforderungen zugeordneten Priorität Zugriff auf Sende-/Empfangsqueues eines physischen Netzadapters einzuräumen.

In industriellen Automatisierungssystemen sollen einerseits mittels Container-Virtualisierung bereitgestellte Anwendungen mit Echtzeit-Anforderungen, insbesondere in Bezug auf verwendete Kommunikationssysteme, genutzt werden können, andererseits soll auf spezielle Netzwerkadapter für derartige Anwendungen zugunsten von Standard-Hardware verzichtet werden. Teilweise sind für Echtzeitkommunikation vorteilhafte Funktionen, wie eine Vielzahl unabhängiger Sende- und Empfangspuffer oder Sendezeitpunkt-Kontrolle, nur für bestimmte Netzwerkadapter verfügbar, die aber keine Virtualisierungsfunktionen unterstützen, wie Virtuelle Maschinen oder OCI- (Open Container Initiative) oder Docker-Container.

Der vorliegenden Erfindung liegt daher die Aufgabe zugrunde, ein Verfahren zur Übermittlung zeitkritischer Daten innerhalb eines Kommunikationsnetzes zu schaffen, das bei Verwendung von Netzwerkadaptern, die keine Unterstützung von Virtualisierungsfunktionen aufweisen, eine Realisierung von virtualisierten Steuerungsanwendungen mit deterministischem Kommunikationseigenschaften ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 12 angegebenen Merkmalen gelöst. Vorteilhafte Weiterbildungen sind in den abhängigen Ansprüchen angegeben.

Entsprechend dem erfindungsgemäßen Verfahren zur Übermittlung zeitkritischer Daten innerhalb eines Kommunikationsnetzes werden die zeitkritischen Daten von bzw. zu auf einem Host ablaufenden Steuerungsanwendungen übermittelt. Sende- bzw. Empfangs-Queues zumindest eines Netzwerkadapters des Host werden für die Steuerungsanwendungen jeweils an einem Socket verfügbar gemacht, der einer Netzwerk-Protokollstapel-Funktionseinheit eines Betriebssystems des Host oder einer Ablaufsteuerungsumgebung zugeordnet ist. Der Netzwerkadapter des Host umfasst insbesondere eine PHY- und MAC-Komponente.

Vorzugsweise werden die Steuerungsanwendungen jeweils mittels zumindest einer Ablaufsteuerungskomponente bereitgestellt, die in eine auf einem Betriebssystem des Host installierte Ablaufsteuerungsumgebung ladbar und dort ausführbar ist. Die Ablaufsteuerungskomponenten laufen innerhalb der Ablaufsteuerungsumgebung vorteilhafterweise isoliert voneinander ab und nutzen gemeinsam einen Betriebssystemkern des Host. Insbesondere können die Ablaufsteuerungskomponenten Software-Container - z.B. Docker Container - , WebAssembly- oder Java-Bytecode sein, während die Ablaufsteuerungsumgebung beispielsweise eine Container-Laufzeitumgebung - z.B. Docker Engine - , eine Web-Assembly-Laufzeitumgebung oder eine Java Virtual Machine ist. Mittels der Ablaufsteuerungsumgebung erfolgt vorzugsweise ein Anlegen, Löschen bzw. Verknüpfen von virtuellen Ressourcen. Dabei umfassen die virtuellen Ressourcen neben Software-Containern beispielsweise auch virtuelle Kommunikationsnetze und diesen zugeordnete Verbindungen.

Darüber hinaus können die Ablaufsteuerungskomponenten auch Container-Gruppen umfassen, beispielsweise Pods. Grundsätzlich können für die Ablaufsteuerungskomponenten auch alternative Micro-Virtualisierungskonzepte, wie Snaps, oder orchestrierte Container-Laufzeitumgebungen, wie podman oder Kubernetes, verwendet werden. Speicherabbilder für Software-Container können beispielsweise aus einem durch eine Vielzahl von Nutzern lesend bzw. schreibend zugreifbaren Speicher- und Bereitstellungssystem abgerufen werden.

Die Sockets können beispielsweise Express Data Path Sockets (XDP Sockets) sein. Mittels derartiger Sockets erfolgt vorteilhafterweise ohne Bearbeitung im Betriebssystem des Host ein direktes Weiterleiten von Datagrammen zu einem Sendepuffer des Netzwerkadapters bzw. ein direktes Verwerfen von Datagrammen.

Die Steuerungsanwendungen fordern erfindungsgemäß jeweils eine Bereitstellung der Sockets von einer Socket-Verwaltungseinheit an, die für die jeweilige Steuerungsanwendung einen neuen zugeordneten Socket erzeugt und diesen an eine verfügbare Sende- bzw. Empfangs-Queue des Netzwerkadapters bindet. Dabei ist die Socket-Verwaltungseinheit mittels einer auf dem Betriebssystem des Host ablaufenden Benutzeranwendung implementiert. Über den jeweils zugeordneten Socket und die an diesen gebundene Sende- bzw. Empfangs-Queue tauschen die Steuerungsanwendungen zeitkritische Daten aus. Vorzugsweise schaltet eine Queue-Steuerungseinheit des Netzwerkadapters bei einem Binden von Sockets an Sende- bzw. Empfangs-Queues Host-interne Hardware- bzw. Software-Schnittstellen zwischen der jeweiligen Sende- bzw. Empfangs-Queue und dem jeweiligen Socket frei.

Mit der vorliegenden Erfindung können insbesondere Netzwerckarten für Time-sensitive Networks verwendet werden, die mehrfache, Hardware-implementierte Sende-/Empfangs-Queues bieten, jedoch keine Unterstützung für Virtualisierung, wie Single Root I/O Virtualization (SR-IOV), bieten. Dies wird durch die Socket-Verwaltungseinheit erreicht, die auf Anfrage von Rechenprozessen im Host, insbesondere von Rechenprozessen in Containern, verfügbare Sende- bzw. Empfangs-Queues ermittelt und diese an hierfür erzeugte, das Betriebssystem des Host entlastende Sockets bindet.

Entsprechend einer vorteilhaften Ausgestaltung der vorliegenden Erfindung ermittelt die Socket-Verwaltungseinheit verfügbare Sende- bzw. Empfangs-Queues, indem sie über Zuordnungen der Sende- bzw. Empfangs-Queues zu Dateisystemelementen des Host entsprechend einer vorgegebenen Reihenfolge der Dateisystemelemente versucht, einen erzeugten Socket mit dem jeweiligen Dateisystemelement zu verknüpfen. Bei einer erfolgreichen Verknüpfung wird eine Abarbeitung dieser Reihenfolge beendet. Somit können verfügbare Sende- bzw. Empfangs-Queues einfach ermittelt werden.

Alternativ oder zusätzlich verfolgt die Socket-Verwaltungseinheit vorteilhafterweise eine Verwendung von an Sende- bzw. Empfangs-Queues gebundenen Sockets durch Betriebssystemprozesse nach, die jeweils bei einem Öffnen eines Socket gestartet bzw. bei einem Schließen eines Socket beendet werden. Anhand einer Protokollierung der Verwendung der Sockets und zugeordneter Sende- bzw. Empfangs-Queues können verfügbare Sende- bzw. Empfangs-Queues effizient und zuverlässig ermittelt werden. Vorzugsweise verfolgt die Socket-Verwaltungseinheit das Öffnen von Sockets bzw. das Schließen von Sockets mittels über das Betriebssystem des Host eingerichteter Kernel Probes für die jeweiligen Betriebssystemprozesse nach.

Die Bereitstellung der Sockets wird vorzugsweise über eine Anwendungsprogrammierschnittstelle der Socket-Verwaltungseinheit angefragt und durchgeführt. Vorteilhafterweise ist die Anwendungsprogrammierschnittstelle sowohl durch Rechenprozesse außerhalb einer auf dem Betriebssystem des Host installierten Ablaufsteuerungsumgebung als auch durch Rechenprozesse ansprechbar, die in die Ablaufsteuerungsumgebung ladbaren Ablaufsteuerungskomponenten zugeordnet bzw. von diesen umfasst sind. Auf diese Weise können Sockets schnell und sicher angefragt und an anfragende Prozesse bereitgestellt werden.

Das erfindungsgemäße System ist zur Durchführung eines Verfahrens entsprechend vorangehenden Ausführungen vorgesehen und umfasst zumindest eine auf einem Host ablaufende Steuerungsanwendung sowie eine Socket-Verwaltungseinheit, die mittels einer auf einem Betriebssystem des Host ablaufenden Benutzeranwendung implementiert ist. Das System ist dafür eingerichtet, dass zeitkritischen Daten von bzw. zu Steuerungsanwendungen übermittelt werden und dass Sende- bzw. Empfangs-Queues zumindest eines Netzwerkadapters des Host für Steuerungsanwendungen jeweils an einem Socket verfügbar gemacht werden, der einer Netzwerk-Protokollstapel-Funktionseinheit des Betriebssystems des Host oder einer Ablaufsteuerungsumgebung zugeordnet ist.

Vorzugsweise sind eine auf einem Betriebssystem des Host installierte Ablaufsteuerungsumgebung und zumindest eine Ablaufsteuerungskomponente zur Bereitstellung der Steuerungsanwendung vorgesehen. Dabei ist die Ablaufsteuerungskomponente in die Ablaufsteuerungsumgebung ladbar und dort ausführbar.

Darüber hinaus ist die Steuerungsanwendung des erfindungsgemäßen Systems dafür eingerichtet ist, eine Bereitstellung von Sockets von der Socket-Verwaltungseinheit anzufordern. Demgegenüber ist die Socket-Verwaltungseinheit dafür eingerichtet, für Steuerungsanwendungen jeweils einen neuen zugeordneten Socket zu erzeugen und diesen an eine verfügbare Sende- bzw. Empfangs-Queue des Netzwerkadapters zu binden. Ferner ist die Steuerungsanwendung dafür eingerichtet, zeitkritische Daten über den zugeordneten Socket und die an diesen gebundene Sende- bzw. Empfangs-Queue austauschen.

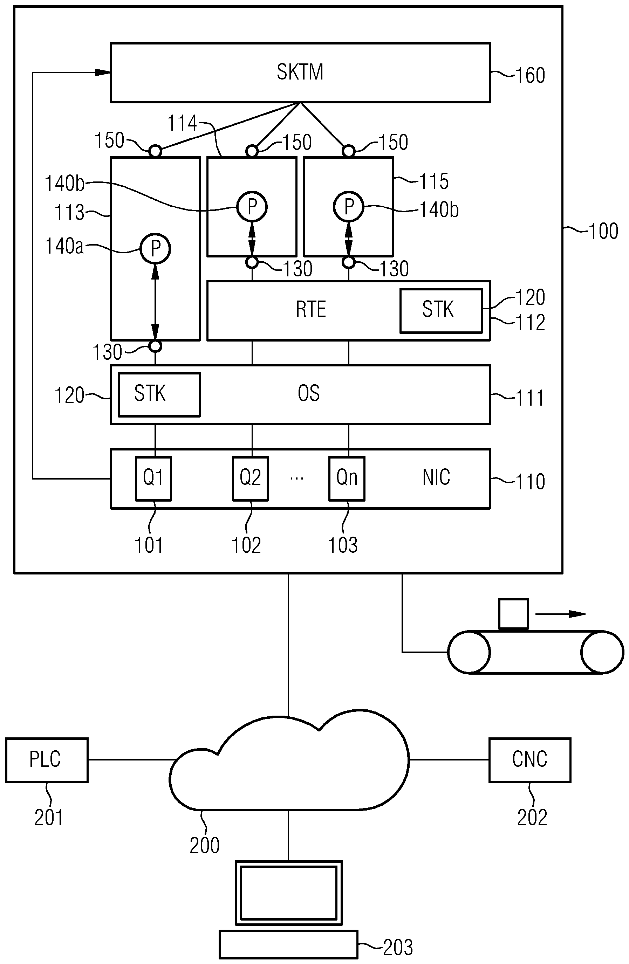

Die vorliegende Erfindung wird nachfolgend an einem Ausführungsbeispiel anhand der Zeichnung näher erläutert. Es zeigt die
- Figur: ein System zur Übermittlung zeitkritischer Daten innerhalb eines Kommunikationsnetzes von bzw. zu Steuerungsanwendungen eines industriellen Automatisierungssystems.

Das in der Figur dargestellte System umfasst einen Host 100 zur Bereitstellung von Steuerungsanwendungen 113-115 eines industriellen Automatisierungssystems. Während die Steuerungsanwendung 113 als ein auf einem Betriebssystem 111 des Host 100 ablaufendes Programm implementiert ist, werden die Steuerungsanwendungen 114-115 mittels Ablaufsteuerungskomponenten, die in eine auf dem Betriebssystem 111 des Host 100 als Anwendung installierte Ablaufsteuerungsumgebung 112 ladbar und dort ausführbar sind, bzw. mittels Containern implementiert. Die Steuerungsanwendungen 113-115 des industriellen Automatisierungssystems sind exemplarisch für zeitkritische Dienste und können auch Überwachungsfunktionen umfassen. Der Host 100 ist über ein Kommunikationsnetz 200, das eine Vielzahl von Daten weiterleitenden Kommunikationsgeräten, insbesondere Switche, umfasst, mit mehreren Endgeräten 201-203, beispielsweise speicherprogrammierbare Steuerungen, numerische Maschinensteuerungen oder Bedien- und Beobachtungsstationen, verbunden.

Der Host 100 kann mittels der Steuerungsanwendungen 113-115 beispielsweise Funktionen von Steuerungsgeräten eines industriellen Automatisierungssystems, wie speicherprogrammierbaren Steuerungen, oder von Feldgeräten, wie Sensoren oder Aktoren, implementieren. Auf diese Weise kann der Host 100 insbesondere für einen Austausch von Steuerungs- und Messgrößen mit durch den Host 100 gesteuerten Maschinen oder Vorrichtungen genutzt werden. Dabei kann der Host 100 aus erfassten Messgrößen geeignete Steuerungsgrößen für die Maschinen oder Vorrichtungen ermitteln.

Alternativ oder zusätzlich kann der Host 100 mittels der Steuerungsanwendungen 113-115 Funktionen einer Bedien- und Beobachtungsstation implementieren und somit zur Visualisierung von Prozessdaten bzw. Mess- und Steuerungsgrößen genutzt werden, die durch Automatisierungsgeräte verarbeitet bzw. erfasst werden. Insbesondere kann der Host 100 zur Anzeige von Werten eines Regelungskreises und zur Veränderung von Regelungsparametern oder -programmen verwendet werden.

Im vorliegenden Ausführungsbeispiel laufen die Container 114-115 jeweils von anderen Containern, Container-Gruppen bzw. Pods isoliert innerhalb der Ablaufsteuerungsumgebung 112 ab.

Dabei nutzen die Container 114-115 jeweils gemeinsam mit anderen auf dem Host 100 ablaufenden Containern einen Kernel des Betriebssystems 111 des Hosts 100. Die Ablaufsteuerungsumgebung 112 ist insbesondere eine Container-Laufzeitumgebung bzw. Container-Engine, durch die ein Anlegen, Löschen bzw. Verknüpfen von virtuellen Ressourcen erfolgt. Dabei können die virtuellen Ressourcen Container, virtuelle Kommunikationsnetze und diesen zugeordnete Verbindungen umfassen. Alternativ zu Containern kann beispielsweise auch WebAssembly- oder Java-Bytecode als Ablaufsteuerungskomponenten verwendet werden. In diesem Fall ist die Ablaufsteuerungsumgebung 112 eine Web-Assembly-Laufzeitumgebung oder eine Java Virtual Machine.

Eine Isolation der Ablaufsteuerungskomponenten bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Container können beispielsweise aus einem durch eine Vielzahl von Nutzern lesend bzw. schreibend zugreifbaren Speicher- und Bereitstellungssystem abgerufen werden.

Zur Übermittlung zeitkritischer Daten innerhalb des Kommunikationsnetzes 200 von bzw. zu den Steuerungsanwendungen 113-115 werden RX/TX-Queues 101-103 eines Netzwerkadapters 110 des Host 100 für die Steuerungsanwendungen 113-115 jeweils an einem Socket 130, insbesondere an einem Express Data Path Socket (XDP Socket), verfügbar gemacht. Dabei sind die Sockets 130 einer Netzwerk-Protokollstapel-Funktionseinheit 120 (Network Stack) des Betriebssystems 111 oder der Ablaufsteuerungsumgebung 112 zugeordnet. Mittels der Sockets 130 erfolgt ein direktes Weiterleiten von Datagrammen zu einem Sendepuffer des Netzwerkadapters 110 bzw. ein direktes Verwerfen von Datagrammen ohne Bearbeitung im Betriebssystem 111 des Host 100. Die Sockets 130 sind insbesondere sowohl durch Rechenprozesse 140a, die einer außerhalb der Ablaufsteuerungsumgebung 112 direkt auf dem Betriebssystem 111 ablaufenden Steuerungsanwendung 113 zugeordnet sind, als auch durch Rechenprozesse 140b ansprechbar, die einem Container 114-115 zugeordnet bzw. von diesen umfasst sind.

Die Steuerungsanwendungen 113-115 fordern jeweils eine Bereitstellung der Sockets 130 von einer Socket-Verwaltungseinheit 160 an, die für die jeweilige Steuerungsanwendung 113-115 einen neuen zugeordneten Socket 130 erzeugt und diesen an eine verfügbare RX/TX-Queue 101-103 des Netzwerkadapters 110 bindet. Dabei wird die Socket-Verwaltungseinheit 160 mittels einer auf dem Betriebssystem 111 des Host 100 ablaufenden Benutzeranwendung implementiert. Damit können die Steuerungsanwendungen 113-115 zeitkritische Daten über den jeweils zugeordneten Socket 130 und die an diesen gebundene RX/TX-Queue 101-103 austauschen. Bei einem Binden von Sockets 130 an RX/TX-Queues 101-103 schaltet eine Queue-Steuerungseinheit des Netzwerkadapters 110 Host-interne Hardware- bzw. Software-Schnittstellen zwischen der jeweiligen RX/TX-Queue 101-103 und dem jeweiligen Socket 130 frei.

Die Socket-Verwaltungseinheit 160 kann verfügbare RX/TX-Queues 101-103 ermitteln, indem sie über Zuordnungen der RX/TX-Queues 101-103 zu Dateisystemelementen des Host 100, beispielsweise Pseudo-Verzeichnisse wie "/sys/class/net", entsprechend einer vorgegebenen Reihenfolge der Dateisystemelemente versucht, einen erzeugten Socket 130 mit dem jeweiligen Dateisystemelement zu verknüpfen. Bei einer erfolgreichen Verknüpfung wird eine Abarbeitung der Reihenfolge beendet. Insbesondere kann die Socket-Verwaltungseinheit 160 nach Erzeugen eines Socket 130 sukzessive probieren, den Socket 130 an eine mögliche RX/TX-Queue 101-103 aus einer Auswahl verfügbarer RX/TX-Queues 101-103 zu binden, bis dies zu einem Erfolg führt.

Entsprechend einer weiteren bzw. anderen Ausführungsvariante verfolgt die Socket-Verwaltungseinheit 160 eine Verwendung von an RX/TX-Queues 101-103 gebundenen Sockets 130 durch Betriebssystemprozesse nach, die jeweils bei einem Öffnen eines Socket 130 gestartet bzw. bei einem Schließen eines Socket 130 beendet werden. Anhand einer Protokollierung der Verwendung der Sockets 130 und zugeordneter RX/TX-Queues 101-103 werden verfügbare RX/TX-Queues 101-103 ermittelt. Vorteilhafterweise verfolgt die Socket-Verwaltungseinheit 160 das Öffnen von Sockets bzw. das Schließen von Sockets 130 mittels über das Betriebssystem 111 des Host 100 eingerichteter Kernel Probes (siehe beispielsweise https://docs.kernel.org/ trace/kprobes.html) für die jeweiligen Betriebssystemprozesse nach.

Vorzugsweise wird die Bereitstellung der Sockets 130 über eine Anwendungsprogrammierschnittstelle 150 der Socket-Verwaltungseinheit 160 angefragt und durchgeführt. Dabei ist die Anwendungsprogrammierschnittstelle 150 sowohl durch Rechenprozesse 140a außerhalb der Ablaufsteuerungsumgebung 112 als auch durch Rechenprozesse 140b ansprechbar, die einem Container 114-115 zugeordnet bzw. von diesen umfasst sind. Die Anwendungsprogrammierschnittstelle 150 kann als Unix Domain Socket ausgeführt sein. Einem Container 114-115 zugeordnete Rechenprozesse 140b erhalten beispielsweise einen Zugang zur Anwendungsprogrammierschnittstelle 150, indem ein Unix Domain Socket in einem für den jeweiligen Container 114, 115 sichtbaren Bereich eines Virtual File System und damit in einem Mount Namespace des Containers per bind-mount zugänglich gemacht wird.

Bei einer Anforderung eines neuen Socket 130 durch einen Rechenprozess 140a, 140b über die Anwendungsprogrammierschnittstelle 150, legt die Socket-Verwaltungseinheit 160 einen neuen Socket an und bindet diesen an einen Satz von bislang ungebundenen RX/TX-Queues 101-103. Ist dies erfolgreich, stellt die Socket-Verwaltungseinheit 160 den neu angelegten und gebundenen Socket 130 über die Anwendungsprogrammierschnittstelle 150 an den jeweiligen Rechenprozess 140a, 140b als Antwort auf seine Anforderung bereit. Insbesondere erlauben Unix Domain Sockets einen Austausch von File Descriptors über Grenzen von Rechenprozessen hinweg.

## Patentansprüche

1. Verfahren zur Übermittlung zeitkritischer Daten innerhalb eines Kommunikationsnetzes, bei dem
- die zeitkritischen Daten von und/oder zu auf einem Host (100) ablaufenden Steuerungsanwendungen (113-115) übermittelt werden,
- Sende- und/oder Empfangs-Queues (101-103) zumindest eines Netzwerkadapters (110) des Host für die Steuerungsanwendungen jeweils an einem Socket (130) verfügbar gemacht werden, der einer Netzwerk-Protokollstapel-Funktionseinheit (120) eines Betriebssystems (111) des Host oder einer Ablaufsteuerungsumgebung (112) zugeordnet ist,
- die Steuerungsanwendungen jeweils eine Bereitstellung der Sockets von einer Socket-Verwaltungseinheit (160) anfordern, die für die jeweilige Steuerungsanwendung einen neuen zugeordneten Socket erzeugt und diesen an eine verfügbare Sende- und/oder Empfangs-Queue des Netzwerkadapters bindet, wobei die Socket-Verwaltungseinheit mittels einer auf dem Betriebssystem des Host ablaufenden Benutzeranwendung implementiert ist,
- die Steuerungsanwendungen zeitkritische Daten über den jeweils zugeordneten Socket und die an diesen gebundene Sende- und/oder Empfangs-Queue austauschen.

2. Verfahren nach Anspruch 1,
bei dem die Steuerungsanwendungen (114-115) jeweils mittels zumindest einer Ablaufsteuerungskomponente bereitgestellt werden, die in eine auf einem Betriebssystem (111) des Host installierte Ablaufsteuerungsumgebung (112) ladbar und dort ausführbar ist.

3. Verfahren nach Anspruch 2,
bei dem die Ablaufsteuerungskomponenten innerhalb der Ablaufsteuerungsumgebung isoliert voneinander ablaufen und gemeinsam einen Betriebssystemkern des Host nutzen.

4. Verfahren nach Anspruch 3,
bei dem die Ablaufsteuerungskomponenten Software-Container, WebAssembly- oder Java-Bytecode sind und bei dem die Ablaufsteuerungsumgebung eine Container-Laufzeitumgebung, eine Web-Assembly-Laufzeitumgebung oder eine Java Virtual Machine ist.

5. Verfahren nach einem der Ansprüche 1 bis 4,
bei dem die Socket-Verwaltungseinheit verfügbare Sende- und/oder Empfangs-Queues ermittelt, indem sie über Zuordnungen der Sende- und/oder Empfangs-Queues zu Dateisystemelementen des Host entsprechend einer vorgegebenen Reihenfolge der Dateisystemelemente versucht, einen erzeugten Socket mit dem jeweiligen Dateisystemelement zu verknüpfen, und eine Abarbeitung der Reihenfolge bei einer erfolgreichen Verknüpfung beendet.

6. Verfahren nach einem der Ansprüche 1 bis 5,
bei dem die Socket-Verwaltungseinheit eine Verwendung von an Sende- und/oder Empfangs-Queues gebundenen Sockets durch Betriebssystemprozesse nachverfolgt, die jeweils bei einem Öffnen eines Socket gestartet und/oder bei einem Schließen eines Socket beendet werden, und anhand einer Protokollierung der Verwendung der Sockets und zugeordneter Sende- und/oder Empfangs-Queues verfügbare Sende- und/oder Empfangs-Queues ermittelt.

7. Verfahren nach Anspruch 6,
bei dem die Socket-Verwaltungseinheit das Öffnen von Sockets und/oder das Schließen von Sockets mittels über das Betriebssystem des Host eingerichteter Kernel Probes für die jeweiligen Betriebssystemprozesse nachverfolgt.

8. Verfahren nach einem Ansprüche 1 bis 7,
bei dem die Sockets Express Data Path Sockets, XDP Sockets, sind und bei dem mittels der Sockets ohne Bearbeitung im Betriebssystem des Host ein direktes Weiterleiten von Datagrammen zu einem Sendepuffer des Netzwerkadapters und/oder ein direktes Verwerfen von Datagrammen erfolgt.

9. Verfahren nach einem der Ansprüche 1 bis 8,
bei dem die Bereitstellung der Sockets (130) über eine Anwendungsprogrammierschnittstelle (150) der Socket-Verwaltungseinheit (160) angefragt und durchgeführt wird.

10. Verfahren nach Anspruch 9,
bei dem die Anwendungsprogrammierschnittstelle (150) sowohl durch Rechenprozesse (140a) außerhalb einer auf dem Betriebssystem (111) des Host (100) installierten Ablaufsteuerungsumgebung (112) als auch durch Rechenprozesse (140b) ansprechbar ist, die in die Ablaufsteuerungsumgebung ladbaren Ablaufsteuerungskomponenten (114-115) zugeordnet und/oder von diesen umfasst sind.

11. Verfahren nach einem der Ansprüche 1 bis 10,
bei dem eine Queue-Steuerungseinheit des Netzwerkadapters bei einem Binden von Sockets an Sende- und/oder Empfangs-Queues Host-interne Hardware- und/oder Software-Schnittstellen zwischen der jeweiligen Sende- und/oder Empfangs-Queue und dem jeweiligen Socket freischaltet.

12. System zur Durchführung eines Verfahrens nach einem der Ansprüche 1 bis 11 mit
- zumindest einer auf einem Host (100) ablaufenden Steuerungsanwendung (113-115),
- einer Socket-Verwaltungseinheit (160), die mittels einer auf einem Betriebssystem (111) des Host ablaufenden Benutzeranwendung implementiert ist,
- wobei das System dafür eingerichtet ist, dass zeitkritischen Daten von und/oder zu Steuerungsanwendungen übermittelt werden und dass Sende- und/oder Empfangs-Queues (101-103) zumindest eines Netzwerkadapters (110) des Host für Steuerungsanwendungen jeweils an einem Socket (130) verfügbar gemacht werden, der einer Netzwerk-Protokollstapel-Funktionseinheit (120) des Betriebssystems des Host oder einer Ablaufsteuerungsumgebung (112) zugeordnet ist,
- wobei die Steuerungsanwendung dafür eingerichtet ist, eine Bereitstellung von Sockets von der Socket-Verwaltungseinheit anzufordern,
- wobei die Socket-Verwaltungseinheit dafür eingerichtet ist, für Steuerungsanwendungen jeweils einen neuen zugeordneten Socket zu erzeugen und diesen an eine verfügbare Sende- und/oder Empfangs-Queue des Netzwerkadapters zu binden,
- wobei die Steuerungsanwendung ferner dafür eingerichtet ist, zeitkritische Daten über den zugeordneten Socket und die an diesen gebundene Sende- und/oder Empfangs-Queue austauschen.

13. System nach Anspruch 12,
bei dem eine auf einem Betriebssystem (111) des Host (100) installierte Ablaufsteuerungsumgebung (112) vorgesehen ist und bei dem zumindest eine Ablaufsteuerungskomponente (114-115) zur Bereitstellung der Steuerungsanwendung vorgesehen ist, wobei die Ablaufsteuerungskomponente in die Ablaufsteuerungsumgebung ladbar und dort ausführbar ist.
